# EUROPEAN PATENT SPECIFICATION

(11) **EP 4 483 228 B1**
(45) Date of publication and mention of the grant of the patent: **28.10.2026**
(21) Application number: 23706670.9
(22) Date of filing: 15.02.2023
(51) Int. Cl.: G02B 27/01, G02B 27/10

(54) **IMPROVEMENTS IN OR RELATING TO WAVEGUIDE DISPLAY SYSTEMS**
VERBESSERUNGEN AN ODER IN ZUSAMMENHANG MIT BILDANZEIGESYSTEMEN
AMÉLIORATIONS APPORTÉES OU SE RAPPORTANT À DES SYSTÈMES D'AFFICHAGE DE GUIDE D'ONDES

(30) Priority: 22.02.2022 GB 202202395; 22.02.2022 EP 22275018
(43) Date of publication of application: 01.01.2025
(73) Proprietor: BAE SYSTEMS plc, London SW1Y 5AD (GB)
(72) Inventor: MILLS, Rory, Rochester Kent ME1 2XX (GB)
(74) Representative: BAE SYSTEMS plc Group IP Department
(86) International application number: PCT/GB2023/050346
(87) International publication number: WO 2023/161607

(56) References cited:
- EP-A2- 1 215 522
- WO-A1-2020/136306
- WO-A1-2020/191170
- CN-A- 110 660 036
- DE-A1- 102016 115 938
- US-A1- 2020 018 968
- US-A1- 2021 072 437
- US-B1- 11 202 043

## Description

The present invention relates to improvements in or relating to waveguide display systems, including but not limited to a display integrity scheme.

A display system may be required to operate with a high level of integrity. This is relevant in many situations, including for example for a flight critical display system, for use with avionics or for a targeting system used by the military. Display systems used to present safety critical information to a user are required to operate with a very high level of integrity. The display system must be able to detect when hazardously misleading information is presented to the user and act to mitigate the issue.

Often the display's integrity is monitored solely in the electronic side of the display path with no optical inspection of the display. This is possible where the display path electronics are fully understood from the generation of the image content through to the construction of the image on the display device. This typically requires a full understanding of the design and function of each component in the display path. This is not always possible, especially with the use of complex COTS (commercial off the shelf) components, such as display chipsets. With the use of COTS components within the system full access to the underlying processes and designs of the COTS items may not be possible which may lead to a more basic integrity monitoring system implemented within the display system giving inaccurate information. In these scenarios optical monitoring of the display would provide a method of closing the display path integrity loop.

Optical integrity monitoring systems previously implemented with various display systems can rely on a separate display path within the display projection optic. These optical integrity monitoring systems add mass and volume to the projection system. When used in display systems such as a head up display (HUDs) this is not a major issue as size and weight are not key design parameters. However, in other systems where mass and volume are a key design parameter, for example in a head worn display (HWD), this type of optical integrity monitoring system is inadequate.

Existing integrity monitoring schemes which allow for basic integrity monitoring of the display device within an optical system, can perform this task by checking whether rows or columns of the display are functioning as expected.

US 11 202 043 B1 discloses a self-calibrating display that can detect and compensate for binocular disparity or other visual imperfection of the display.

There is thus a need for a higher fidelity integrity monitoring system, capable of detecting complex display faults and scaled appropriately such that the integrity monitoring system is usable in smaller form factor applications, such as a head worn display system. The invention provides a scheme which overcomes at least some of the disadvantages of present systems and for implementing a lightweight, low volume optical monitoring package. The invention allows for more detailed pixel level monitoring to take place.

Accordingly, one object of the present invention is to provide a waveguide display system that is able to determine the integrity of an image.

### SUMMARY

According to one aspect of the present invention there is provided a system for delivering an image to a user via a waveguide display system and for determining integrity of an image, the system comprising: a combination waveguide, in coupling and out coupling assembly comprising: a waveguide region; an in coupling region configured to receive a collimated image from an imaging system and an out coupling region configured to direct the collimated image toward an eye of a user, wherein the waveguide is configured to direct at least a first portion of the collimated image from the in coupling region towards the out coupling region to be directed to the user; and wherein prior to the collimated image being directed towards the eye, a second portion of the collimated image is configured to be directed towards an integrity monitoring module which is configured to determine at least one discrepancy between the collimated image and the image to thereby correct the first portion of the collimated image, and wherein the in coupling region is configured to split the collimated image into the first and second portions.

In an aspect the in coupling and out coupling regions each comprise a surface of the waveguide assembly providing a predetermined optical effect.

In an aspect each surface of the waveguide assembly comprises a reflective coating.

In an aspect each surface of the waveguide assembly is a predetermined shape.

In an aspect the in coupling region includes a reflective surface having a saw-tooth profile which splits the light into a +1R diffracted beam and a -1R diffracted beam.

In an aspect the in coupling region includes a reflective surface having a saw-tooth profile which splits the light into different order beams.

In an aspect the out coupling region includes a reflective surface having a saw-tooth profile.

In an aspect the collimated image comes from a collimation optic configured to output an exit pupil comprising the collimated image.

In an aspect the in coupling region directs the first portion of the collimated image towards the out coupling region and the second portion of the collimated image towards the integrity monitoring module.

In an aspect the integrity monitoring module comprises an optical arrangement configured to direct the second portion of the collimated image to a sensor.

In an aspect the integrity monitoring module is further configured to analyse the second portion of the collimated image to determine the at least one discrepancy between the collimated image and the image and to send to the system information related to at least one of the nature of the at least one discrepancy between the collimated image and the image and one or more corrections to mitigate or overcome the at least one discrepancy between the collimated image and the image.

In an aspect the system of is for use in a binocular arrangement comprising one combination waveguide, in coupling and out coupling assembly for each eye.

In an aspect a correction system is configured to implement a correction to the image such that a discrepancy between the collimated image and the image is reduced.

In an aspect the discrepancy is reduced based on comparison with a threshold discrepancy.

In an aspect the integrity monitoring module comprises an optical arrangement configured to direct the second portion of the collimated image to a sensor.

In an aspect the integrity monitoring module comprises a lens element and a sensor to provide the second portion of the collimated image to a monitoring loop in which discrepancies between the collimated image and image are determined.

In an aspect the integrity monitoring module is further configured to analyse the second portion of the collimated image to determine the at least one discrepancy between the collimated image and the image and to send to the system information related to at least one of the nature of the at least one discrepancy between the collimated image and the image and one or more corrections to mitigate or overcome the at least one discrepancy between the collimated image and the image.

According to another aspect of the present invention there is provided a Heads Up Display including the system of another aspect of the invention.

According to another aspect of the present invention there is provided a head worn display system of another aspect of the invention.

According to another aspect of the present invention there is provided an integrity monitoring module for use in the system of any preceding claim, the integrity monitoring module comprising: optics configured to receive the second potion of the collimated image; direct the second potion of the collimated image towards one or more sensors configured to determine at least one discrepancy between the collimated image and the image on the second potion of the collimated image; generate an output indicative of at least one of the at least one discrepancy between the collimated image and the image and a correction to the at least one discrepancy between the collimated image and the image.

According to another aspect of the present invention there is provided a method for delivering an image to a user via a waveguide display system and for determining integrity of an image, the method comprising: receiving via a combination waveguide, in coupling and out coupling assembly a collimated image from an imaging system; splitting the collimated image into first and second portions; directing via an out coupling region the first portion of the collimated image to an eye of a user, directing the second portion of the collimated image to an integrity monitoring module which determines at least one discrepancy between the collimated image and the image in the collimated image to

### DESCRIPTION OF THE DRAWINGS

Figure 1 is a schematic diagram of a waveguide assembly, according to an aspect of the present invention.
Figure 2 is a schematic diagram of a waveguide assembly, according to an aspect of the present invention.
Figure 3 is a schematic diagram of an optical arrangement for an integrity monitoring optic package, according to an aspect of the present invention.
Figure 4 is a schematic diagram of an arrangement for a binocular display system utilising a single optical integrity monitoring module, according to an aspect of the present invention.
Figure 5 is a schematic diagram of an arrangement for a further binocular display system utilising a single integrity monitoring module, according to an aspect of the present invention.
Figure 6 is a schematic diagram of an arrangement for a further binocular display system utilising a single integrity monitoring module, according to an aspect of the present invention.
Figure 7 is a schematic diagram of a reflective in coupling element, according to an aspect of the present invention.
Figure 8 is a flow diagram for using the single integrity monitoring module, according to an aspect of the present invention.
Figure 9 is a flow diagram for using the single integrity monitoring module for a particular correction, according to an aspect of the present invention.

### DESCRIPTION OF THE INVENTION

In general, the present invention relates to an integrity monitoring scheme (also referred to as an optical integrity monitoring system) used with waveguide-based displays which provides a scheme for checking the optical output of the display system and bypassing any issues with the use of existing components within the display path which cannot be interrogated or modified. A number of examples are presented, which make use of diffractive optical elements for an in coupling element and an out coupling element. The invention could also encompass other optical methods for the coupling of light into and out of the waveguide assembly, such as reflective structures. The image bearing light is then collected by an optical sensing element which provides a way to analyse the display content as part of the optical integrity monitoring system.

Integrity monitoring systems have been implemented in Avionic display systems or imaging which are used as primary flight instruments for some time. In some cases, the displays integrity is monitored solely in the electronic side of the display path with no optical inspection of the display. This is possible where the display path electronics are fully understood from the generation of the image content through to the construction of the image on the display device. This typically requires a full understanding of the design and function of each component in the display path. This is not always possible, especially with the use of complex COTS components, such as display chipsets. Additionally, these methods do not account for any physical changes within the optical system which might affect the display image, for example optical lenses moving causing the display image to become defocussed. In these scenarios optical monitoring of the display provides a method of closing the display path integrity loop. The optical integrity monitoring system then feeds back data which can be used to either correct discrepancies between the commanded or original image from a scene and the image displayed to the user, or inform the user of a failure within the device and removing the risk of potentially misleading information being displayed to the user. The original image may comprise a collimated image which is received from a source, such as a display, camera or any other imaging system. The collimated image comes from a collimation optic configured to output an exit pupil comprising the collimated image. This will be described in greater detail below.

In the figures described below a solid light ray (primary path) represents the part of light directed towards a user and the dotted line (secondary path) represents the part of light directed to an optical integrity monitoring module.

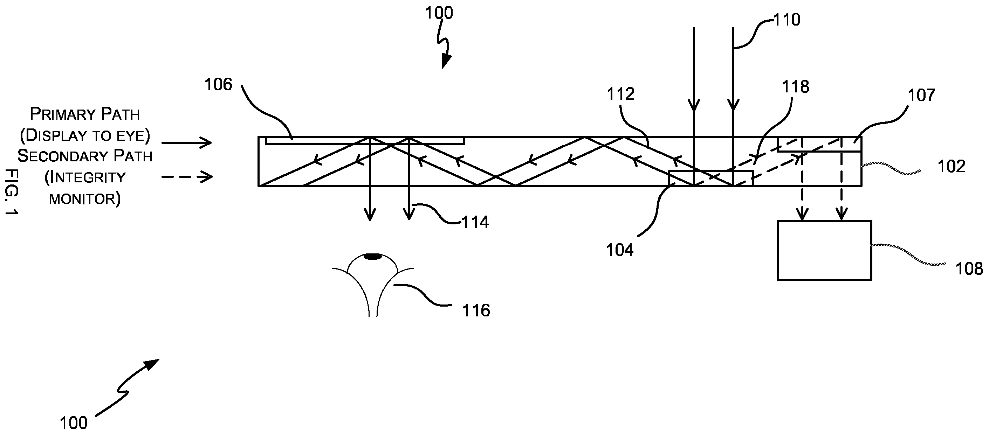

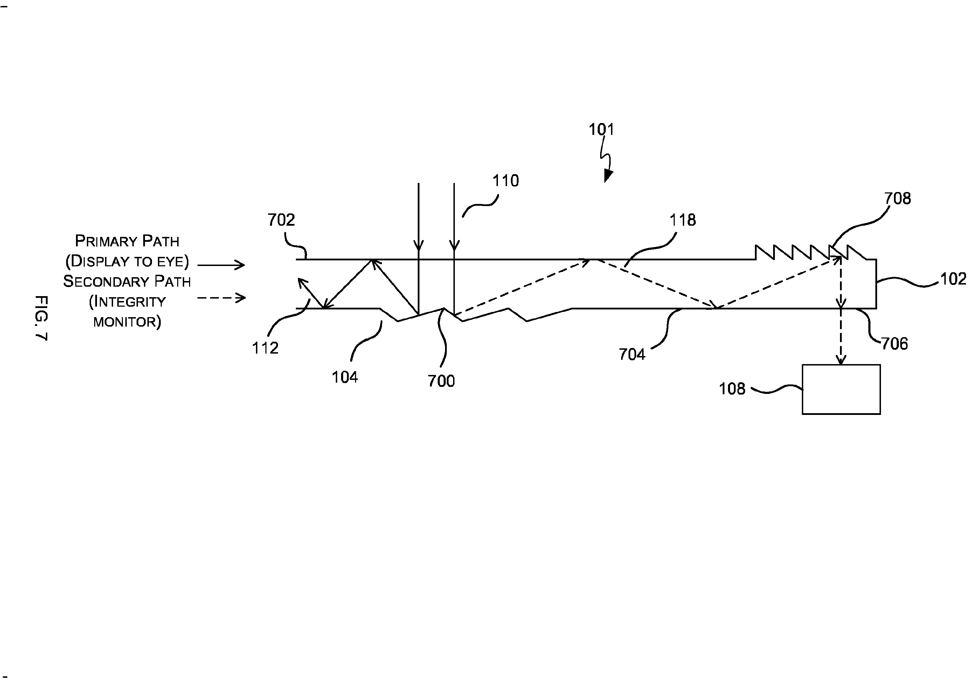

Referring to Figure 1, an optical system 100 (also referred to as a waveguide assembly) is shown. The optical system includes a pupil expansion device including a waveguide substrate 102, an in coupling region 104 and, in this example, two out coupling regions 106 and 107. The waveguide substrate may also include one or more additional optical elements on or within the substrate for performing additional optical functions. The waveguide substrate (also referred to as the waveguide region) 102 allows light to be directed between and beyond the in and out coupling regions. The waveguide substrate is shown in cross-section and has substantially parallel sides although this is not essential. The waveguide assembly is described in Figure 7 below. In addition, the system includes an integrity monitoring module 108, which is ideally an optical integrity monitoring module.

The in coupling region directs the majority of the light 110 along a primary path 112 (shown as a solid line) towards the out coupling region 106 which then expands the pupil and directs light 114 out of the waveguide assembly towards the user's eye 116. In the case of the diffractive in coupling regions, the primary path 112 is created by the +1R diffracted order (reflected order). Simultaneously the in coupling region 104 directs a smaller proportion of the incident light along a secondary path 118 within the waveguide assembly (shown by the dashed line) towards the secondary out coupling region 107. This secondary path is created by the -1R diffracted order (reflected order). The secondary out coupling region 107 directs the light out of the waveguide assembly which is then collected by the optical integrity monitoring module 108.

The split of light between the positive and negative diffractive orders can be controlled by the shape of the diffractive structure and any coating applied to the structure. This will be described in more detail below. This aspect of the invention makes use of the +1 and -1 orders; however, any diffractive orders could be utilised to split the light paths. The out coupling regions may be the conjugate of the in coupling region to conserve the angles of the light paths injected into and ejected from the waveguide assembly. The secondary out coupling region could also be configured to be used in transmission rather than reflection. Other optical systems having the ability to split and transmit the light as required may also be used.

The optical integrity monitoring module is configured to analyse portion 118 to determine at least one optical discrepancy between an original collimated and received image and to send to the system information related to at least one of the nature of the optical discrepancies between the original and received image and one or more corrections to mitigate or overcome the optical discrepancies between the original and received image. The manner in which the integrity module analyses and determines discrepancies is discussed further below with reference to figure 10 and 11.

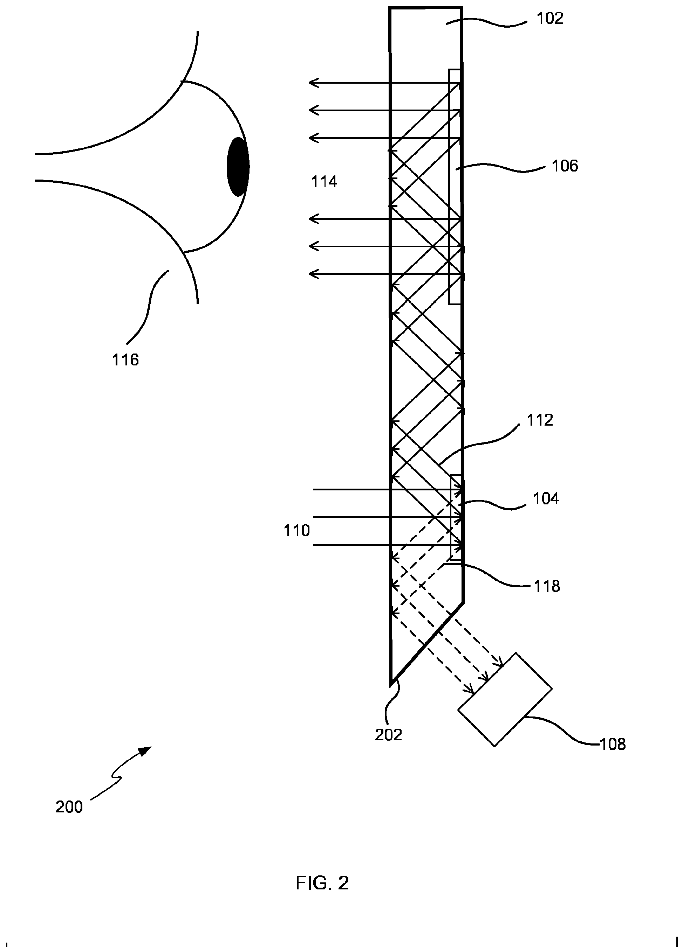

Referring now to Figure 2, which shows a similar arrangement to the Figure 1 scheme. In this arrangement 200 the light traveling along the secondary path 118 is coupled out of the waveguide assembly by a prismatic feature 202. The light coupled from the waveguide assembly is then collected by the optical integrity monitoring module 108. If the in coupling region 104 is diffractive and the incident light bundle 110 is polychromatic or broad in terms of wavelength there may be some limitations. The chromatic spread of light induced by the diffractive region may not be compensated for by the prismatic element, therefore light collected by the optical integrity monitoring module will include some optical discrepancies between the original and received image in comparison to the light injected into the waveguide assembly. This can be overcome by using narrow spectrum light sources and compensating for any lateral colour effects in the optical integrity monitoring module. It is also an option to filter the light collected by the optical integrity monitoring module to a narrower spectrum than the light used within the display path.

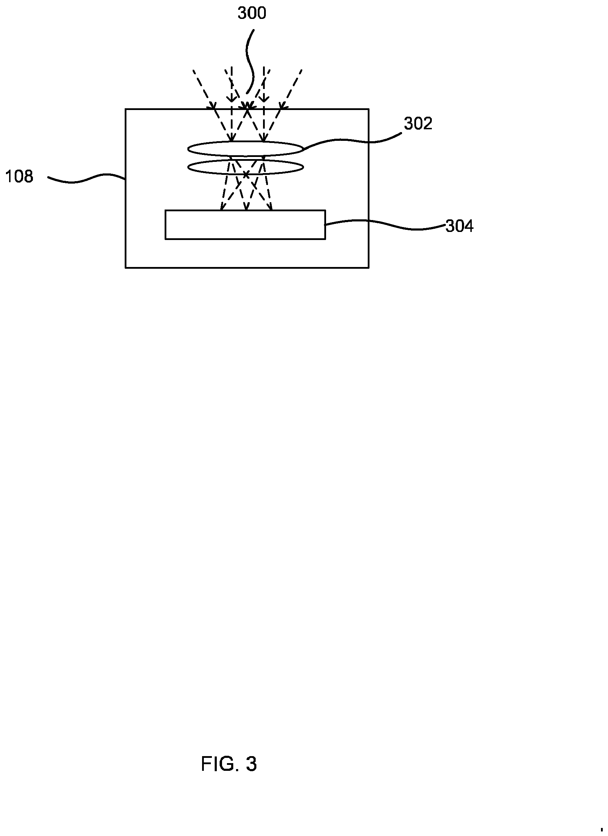

Figure 3 shows an example of an optical arrangement of the optical integrity monitoring module 108. There are several options for the optical integrity monitoring module. In one option the monitor could be a simple camera system, where the light 300 captured is focused by one or more lens elements 302 onto a sensor 304 to provide an image of the displayed content. It is possible to provide a greater complexity of monitoring from pixel level integrity monitoring to a simpler monitoring of specific displayed elements where the resolution of the camera is matched to or greater than that of the display system. The sensing element could also be of a more basic nature and could range from a simple single photodiode capable of measuring light levels to multiple light detection sites providing resolution across the displayed image. The sensing element could be colour capable. It will be appreciated that many options are possible.

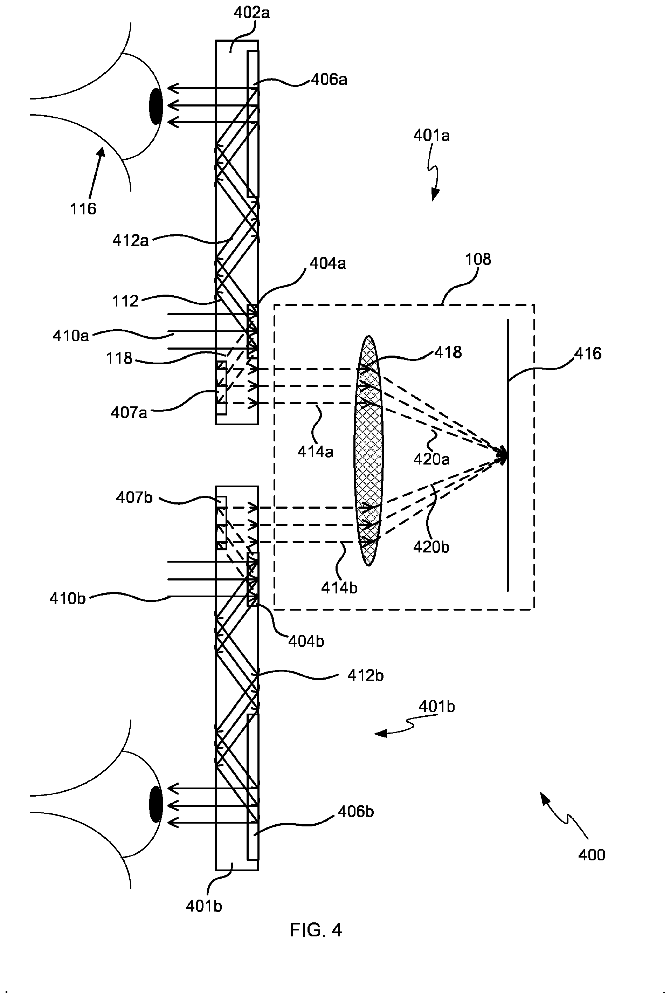

Figure 4, Figure 5, and Figure 6 show how an arrangement for a binocular display system may work whilst utilising a single optical integrity monitoring module 108. In these figures the same reference applies to corresponding features.

The arrangement 400 in Figure 4 comprises a wave guide assembly 401a and 401b for each eye. Each waveguide assembly is similar to the assembly shown in either Figure 1 or 2. According each waveguide assembly includes a respective waveguide and pupil expanders, respective in coupler regions 404a and 404b and respective out coupler regions 406a and 406b and 407a, 407b. The arrangement also includes the optical integrity monitoring module 108. Each in coupler region receives light 410a and 410b and splits each into two portions of light 412a, 412b and 414a, 414b. The light 414a and 414b which passes through the waveguide assembly and is collected by the optical integrity monitoring module 108 from both waveguide assemblies 401a and 401b is directed to a desired position on a sensor 416 via lens or lenses 418.

In Figure 4 light out coupled from the waveguide assemblies is collected by the single optical integrity monitoring module 108. Light from both waveguide assemblies will occupy the same area on the optical integrity monitoring module. In this arrangement it would be possible if the display was bi-ocular (same image presented to both eyes) then integrity monitoring of each channel could be conducted by monitoring luminance intensities as well as positional content on the sensor. If image content was only being shown to one eye rather than two, the measured intensity would be lower than expected, indicating a fault. In the case of a binocular display system (different image to each eye) the integrity monitoring could make use of time multiplexing to split the images. For example, the image to the left eye is driven by its display device, and then blanked, during this blanking period the image to the right eye is driven by its display device, and then blanked and so on. In synchronisation with this display drive arrangement, the optical integrity monitoring module is configured to capture sequentially frames 420b, 420a respectively at the same time as the image is displayed to the left eye, and subsequently timed to capture the separate image driven to the right eye.

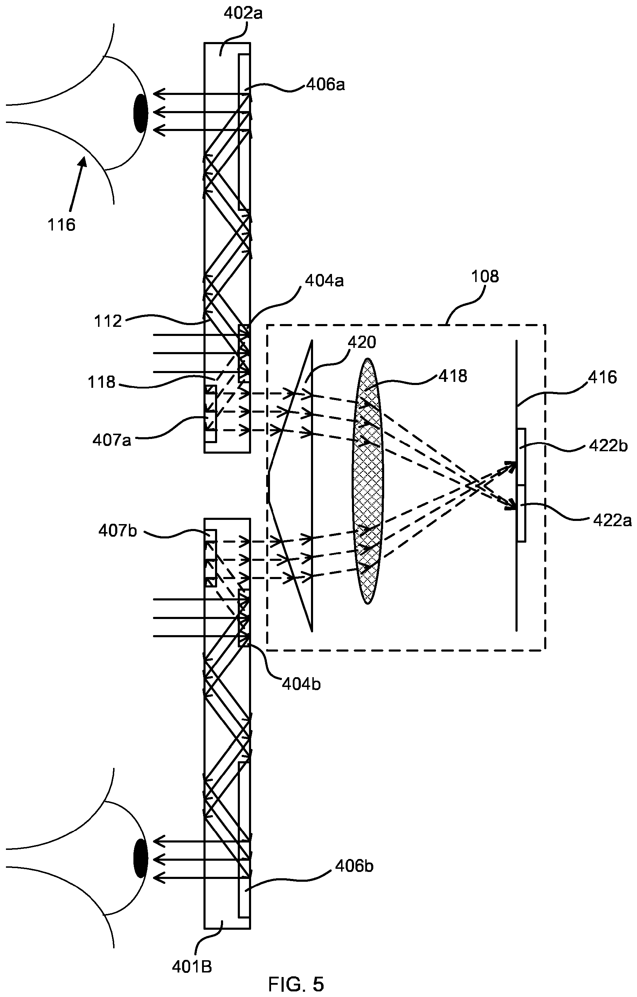

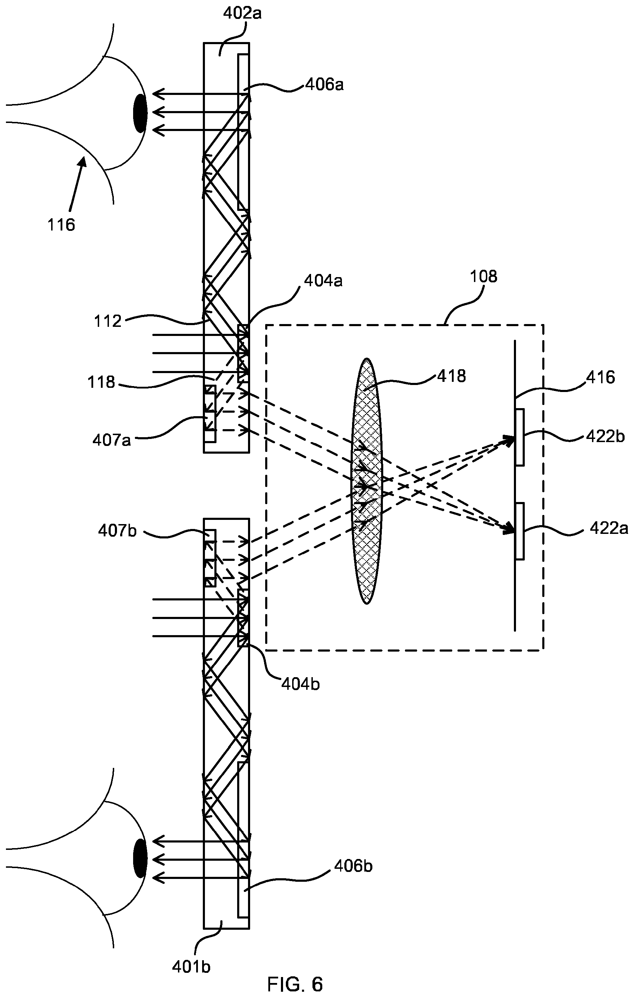

The arrangements shown in Figure 5 and Figure 6 solve the problem of the light collected from each waveguide assembly occupying the same area on the sensor by deviating the light paths. In the case of Figure 5, light out coupled by the secondary out couplers passes through a beam deviator 420. This beam deviator acts like a prism, imparting an angular deviation to the light's path. If the angle and refractive index of the material of the beam deviator are selected correctly, it is possible to separate the field of view from each of the waveguide assemblies so that they are separated physically on the sensor. This results in two images being received by the sensor side by side, allowing for the analysis of both images simultaneously.

In Figure 6 the secondary out coupling region imposes a deviation to the out coupled light. In the case of diffractive regions, this could be achieved by changing the pitch and/or spacing of the diffractive structure. This may have similar chromatic limitations as described previously in relation to Figure 2. In the case of reflective structures being used in the out coupling region, the angular deviation could be achieved by altering the reflective facet angle.

In order to provide optical monitoring of the left eye display and right eye display separately the display system may use time multiplexing to split the images or to switch between the left and right displays. For example, each image is displayed at one eye and then the other. In the time the image is being displayed at one eye the other may be blanked In synchronisation with this display drive arrangement the sensor is configured to capture a frame at the same time as the image is displayed to the left eye, and subsequently timed to capture the separate image driven to the right eye. In order to determine the optical discrepancies between the original collimated image and actual image displayed to each eye and caused in the system would thus require a complex analysis.

Figure 7 shows waveguide assembly 101 including a waveguide substrate 102, an in coupling region 104 and an out coupling region 106. The waveguide substrate includes internal surfaces that are substantially parallel to one another, shown as regions 702, 704 and 706. These surfaces enable internal reflection of light through the waveguide assembly. As previously described light enters the waveguide substrate via the in coupling region and is split and directed proportionately in the primary path and the secondary path. Each of the in coupling and out coupling regions are configured to provide an optical effect to light incident thereon. The effect can be predetermined by the shape, size and nature of the required optical effect. For example, the in coupling region includes an internal reflective surface 700 which splits the light into the +1R and -1R beams 112 and 118. The proportion of light transmitted in each order can be controlled or dictated by the form, shape and/or size of optical surface 700. In the example shown the reflective surface is a saw-tooth wave form. It will be appreciated different forms could be used. It will also be appreciated that the in coupling region could be laser based or any other appropriate type of optic.

Similarly, light that passes along the secondary path 118 exits via an out coupling region 106 having a reflective surface 708. This surface again incudes a saw-tooth form. Light is passed to the optical integrity monitoring module 108 for processing as discussed above. As can be seen the saw-tooth form of the out coupler has a different form than that of the in coupler. This changes how the light is directed. It should be noted that the form, shape and size of any optical region can be changed to adapt to the nature of the waveguide assembly and the overall system and/or system intent.

Figure 7 is not in proportion, and it will be understood that waveguide substrates 702, 704 and 706 will comprise the main proportion of the waveguide assembly and the in coupling and out coupling regions will be sized as required.

The waveguide assembly of the present invention can be coupled to the optical integrity monitoring module, which may or may not be part of the system. As the waveguide assembly is a combined waveguide substrate, in coupler and out coupler, the assembly is formed as a single compact component which is relatively lighter in weight than the individual separate elements.

In all schemes the light extracted for integrity monitoring is analysed to determine if there are any optical discrepancies between the original and received image introduced by the display system. Information relating to any such optical discrepancies between the original and received image is fed back to a correction system (not shown) to apply a correction to the light arriving at the eye of the user.

The integrity monitoring module is able to detect and generate corrections for all optical discrepancies between the original and actual image. There are several possible uses for the integrity monitoring system. In a basic usage scenario, the integrity monitoring system looks for discrepancies between the collimated image and the displayed image, any discrepancy can then be compared to a pre-set threshold value for that discrepancy type. If the discrepancy exceeds the threshold value, then the user is made aware of a fault within the system via a correction or feedback system forming part of the overall system.

In another scenario it may be the case that the fault is a frozen display i.e. the display is not being updated with the latest image. In this case the user may be made aware of the issue by the display channel being switched off. This would prevent the user being exposed to misleading information. In more complex systems it could be that a portion or section of the image is incorrect, due to "stuck pixels" in the display generator. In this case it may be possible to reposition information which would be displayed over those pixels to another position on the display, therefore still providing the correct information to the user albeit in a different location.

The integrity monitoring system may be capable of monitoring the following discrepancies in the display path:
Magnification error resulting in incorrect image scaling.
Image shift causing the image to not align correctly with the outside world.
Image rotation.

Colour channel failure, causing the loss of some commanded colours and the incorrect rendering of mixed colours.

Luminance discrepancies, the image being displayed to the eye not corresponding to the set / commanded brightness level.

Display failure, no image being displayed to the user.

In some cases, a correction may be able to be applied to the driven image to mitigate the detected failure, such as a luminance adjustment, an image shift/rotation. However, in some other cases such as colour channel failure, the user could be made aware of the reduced colour palette being made available. The information may still be displayed to the user, but perhaps in monochrome, removing the advantage of colour coded symbols etc. but still allowing the user to see an accurate representation of the image.

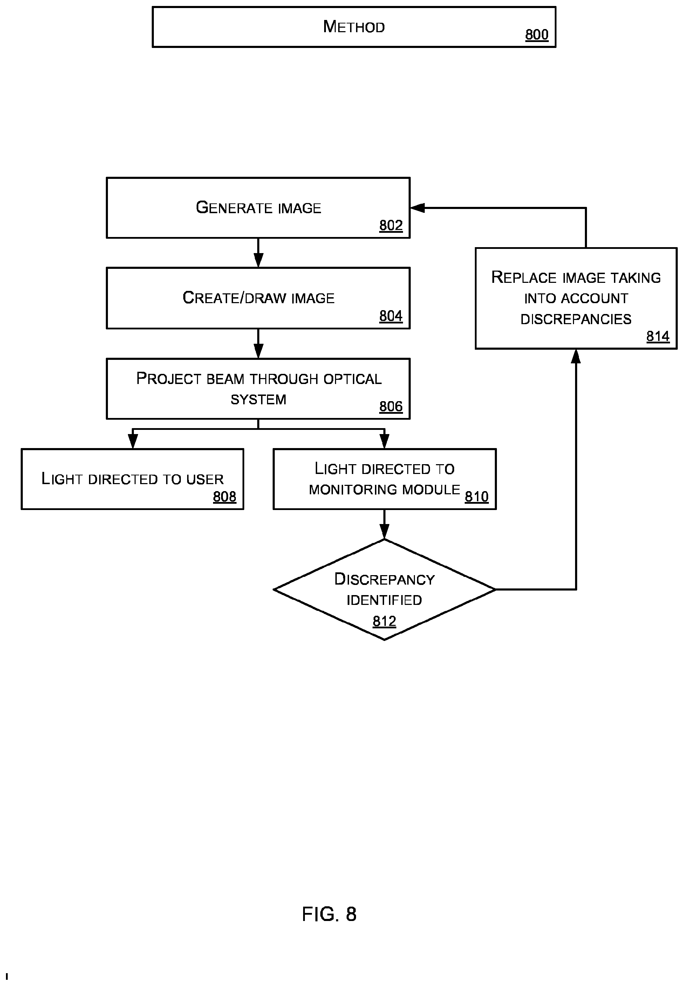

Figure 8 shows and example of a generic monitoring process 800. An image is generated, 802, by the system or any appropriate image generating means. The image is created or drawn 804, so that is can be displayed. The created image is projected 806, though the relevant optical system, in this case system 100. A portion of light is directed towards a user 808 and a portion towards the monitor including the integrity monitoring module 810. The portion directed towards the monitor passes through a monitoring loop 812 in which discrepancies between the original collimated image and actual image are determined or identified. The image is then redrawn, recreated, corrected, blanked or otherwise altered 814 and then returned to step 802 in which the image is generated.

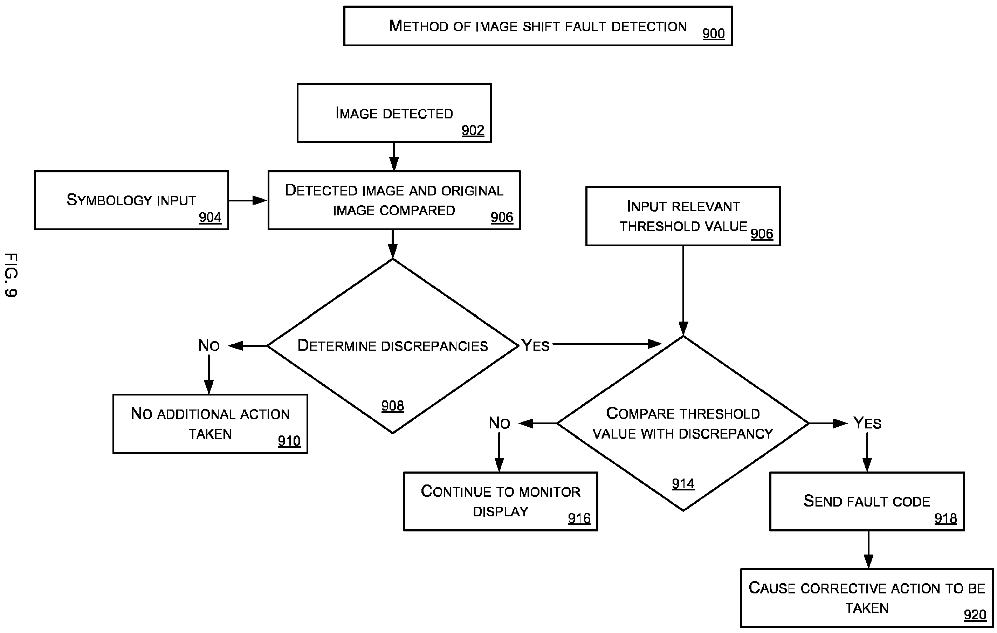

Figure 9 shows the process for one specific discrepancy by way of example. This this case the example 900 is an image shift fault detection. A position of a symbol in the image is detected 902. The symbol position in the commanded or original image is input (symbology input) 904. The detected image and the original image are compared 906. A determination is made as to whether there is a discrepancy between the images 908. If no, the process continues to monitor the display 910 and no additional action is taken. If yes, the process seeks a relevant threshold value 912 which is then compared with the discrepancy, 914. If the discrepancy does not exceed the threshold the process continues to monitor the display 916 and no additional action is taken. If the discrepancy does exceed the threshold the process sends a fault code to the system 918. The system Control Processing Unit (CPU) causes corrective action (920) to be taken, such as for example blanking the display or otherwise alerting the user.

The invention is intended to be used in waveguide HWDs, however its use is not limited to HWDs and could be implemented on the waveguide HUD system. Whilst the invention provides the ability to monitor the integrity of the images displayed to the user, it could also be implemented in a simpler form to monitor display brightness and colour. In these examples the sensor in the optical integrity monitoring module would be appropriate to the intended type of monitoring.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality. In the claims, the term 'comprising' or "including" does not exclude the presence of other elements.

## Claims

1. A system for delivering an image to a user via a waveguide display system and for determining integrity of an image, the system comprising:
a combination waveguide, in coupling and out coupling assembly comprising:
a waveguide region (102);
an in coupling region (104) configured to receive a collimated image (110) from an imaging system;
an out coupling region (106) configured to direct the collimated image toward an eye of a user (116), and
an integrity monitoring module (108),
wherein the waveguide is configured to direct at least a first portion (112) of the collimated image from the in coupling region towards the out coupling region to be directed to the user; and
wherein prior to the collimated image being directed towards the eye, a second portion (118) of the collimated image is configured to be directed towards the integrity monitoring module (108) which is configured to determine at least one discrepancy between the collimated image and the image to thereby correct the first portion of the collimated image,
and wherein the in coupling region is configured to split the collimated image into the first and second portions.

2. The system of claim 1, wherein the in coupling and out coupling regions each comprise a surface of the waveguide assembly providing a predetermined optical effect.

3. The system of claim 2, wherein each surface of the waveguide assembly comprises a reflective coating.

4. The system of claim 2 or claim 3, wherein each surface of the waveguide assembly is a predetermined shape.

5. The system of any one of claims 2 to 4, wherein the in coupling region includes a reflective surface having a saw-tooth profile which splits the light into a +1R diffracted beam and a -1R diffracted beam.

6. The system of any one of claims 2 to 4, wherein the in coupling region includes a reflective surface having a saw-tooth profile which splits the light into different order beams.

7. The system of any one of claims 2 to 6, wherein the out coupling region includes a reflective surface having a saw-tooth profile.

8. The system of any preceding claim, wherein the collimated image comes from a collimation optic configured to output an exit pupil comprising the collimated image.

9. The system of any one of claims 1 to 8, wherein the in coupling region directs the first portion of the collimated image towards the out coupling region and the second portion of the collimated image towards the integrity monitoring module.

10. The system of any preceding claim for use in a binocular arrangement comprising one combination waveguide, in coupling and out coupling assembly for each eye.

11. The system of any preceding claim, further comprising a correction system configured to implement a correction to the image such that a discrepancy between the collimated image and the image is reduced.

12. A Heads Up Display including the system of any preceding claim.

13. A head worn display system including the system of any one of claims 1 to 9.

14. A method for delivering an image to a user via a waveguide display system and for determining integrity of an image, the method comprising:
receiving via a combination waveguide, in coupling and out coupling assembly a collimated image from an imaging system;
splitting, via an in coupling region, the collimated image into first and second portions;
directing via an out coupling region the first portion of the collimated image to an eye of a user,
directing the second portion of the collimated image to an integrity monitoring module which determines at least one discrepancy between the collimated image and the image in the collimated image to correct the first portion of the collimated image.

## Patentansprüche

1. System zum Bereitstellen eines Bildes an einen Benutzer über ein Wellenleiteranzeigesystem und zum Bestimmen einer Integrität eines Bildes, das System umfassend:
eine Kombination aus Wellenleiter-, Einkoppel- und Auskoppelanordnung, umfassend:
einen Wellenleiterbereich (102);
einen Einkoppelbereich (104), der konfiguriert ist, um ein kollimiertes Bild (110) von einem Abbildungssystem zu empfangen;
einen Auskoppelbereich (106), der konfiguriert ist, um das kollimierte Bild zu einem Auge eines Benutzers (116) hin zu richten, und
ein Integritätsüberwachungsmodul (108),
wobei der Wellenleiter konfiguriert ist, um mindestens einen ersten Abschnitt (112) des kollimierten Bildes von dem Einkoppelbereich zu dem Auskoppelbereich hin zu richten, um auf den Benutzer gerichtet zu werden; und
wobei, bevor das kollimierte Bild zu dem Auge hin gerichtet wird, ein zweiter Abschnitt (118) des kollimierten Bildes konfiguriert ist, um auf das ntegritätsüberwachungsmodul (108) hin gerichtet zu werden
das konfiguriert ist, um mindestens eine Abweichung zwischen dem kollimierten Bild und dem Bild zu bestimmen, um dadurch den ersten Abschnitt des kollimierten Bildes zu korrigieren,
und wobei der Einkoppelbereich konfiguriert ist, um das kollimierte Bild in den ersten und den zweiten Abschnitt aufzuteilen.

2. System nach Anspruch 1, wobei die Einkoppel- und Auskoppelbereiche jeweils eine Oberfläche der Wellenleiteranordnung umfassen, die einen vorbestimmten optischen Effekt liefert.

3. System nach Anspruch 2, wobei jede Oberfläche der Wellenleiteranordnung eine reflektierende Beschichtung umfasst.

4. System nach Anspruch 2 oder 3, wobei jede Oberfläche der Wellenleiteranordnung eine vorbestimmte Form aufweist.

5. System nach einem der Ansprüche 2 bis 4, wobei der Einkoppelbereich eine reflektierende Oberfläche einschließt, die ein Sägezahnprofil aufweist, das das Licht in einen gebeugten +1R-Strahl und einen gebeugten -1R-Strahl aufteilt.

6. System nach einem der Ansprüche 2 bis 4, wobei der Einkoppelbereich eine reflektierende Oberfläche einschließt, die ein Sägezahnprofil aufweist, das das Licht in Strahlen unterschiedlicher Ordnung aufteilt.

7. System nach einem der Ansprüche 2 bis 6, wobei der Auskoppelbereich eine reflektierende Oberfläche einschließt, die ein Sägezahnprofil aufweist.

8. System nach einem der vorstehenden Ansprüche, wobei das kollimierte Bild von einer Kollimationsoptik stammt, die konfiguriert ist, um eine Austrittspupille auszugeben, umfassend das kollimierte Bild.

9. System nach einem der Ansprüche 1 bis 8, wobei der Einkoppelbereich den ersten Abschnitt des kollimierten Bildes zu dem Auskoppelbereich hin und den zweiten Abschnitt des kollimierten Bildes zu dem Integritätsüberwachungsmodul hin richtet.

10. System nach einem der vorstehenden Ansprüche zur Verwendung in einer binokularen Anordnung, umfassend eine Kombination aus Wellenleiter-, Einkoppel- und Auskoppelanordnung für jedes Auge.

11. System nach einem der vorstehenden Ansprüche, ferner umfassend ein Korrektursystem, das konfiguriert ist, um eine Korrektur an dem Bild derart durchzuführen, dass eine Abweichung zwischen dem kollimierten Bild und dem Bild verringert wird.

12. Head-up-Anzeige, umfassend das System nach einem der vorstehenden Ansprüche.

13. Am Kopf getragenes Anzeigesystem, umfassend das System nach einem der Ansprüche 1 bis 9.

14. Verfahren zum Bereitstellen eines Bildes an einen Benutzer über ein Wellenleiteranzeigesystem und zum Bestimmen der Integrität eines Bildes, das Verfahren umfassend:
Empfangen eines kollimierten Bildes von einem Bildgebungssystem über eine Kombination aus Wellenleiter-, Einkoppel- und Auskoppelanordnung;
Aufteilen, über einen Einkoppelbereich, des kollimierten Bildes in erste und zweite Teile;
Richten des ersten Abschnitts des kollimierten Bildes über einen Auskoppelbereich auf ein Auge eines Benutzers,
Richten des zweiten Abschnitts des kollimierten Bildes auf ein Integritätsüberwachungsmodul, das mindestens eine Abweichung zwischen dem kollimierten Bild und dem Bild in dem kollimierten Bild bestimmt, um den ersten Abschnitt des kollimierten Bildes zu korrigieren.

## Revendications

1. Système destiné à fournir une image à un utilisateur par l'intermédiaire d'un système d'affichage à guide d'ondes et à déterminer l'intégrité d'une image, le système comprenant :
un ensemble de guides d'ondes combinés, de couplage d'entrée et de couplage de sortie comprenant :
une région de guide d'ondes (102) ;
une région de couplage d'entrée (104) configurée pour recevoir une image collimatée (110) à partir d'un système d'imagerie ;
une région de couplage de sortie (106) configurée pour diriger l'image collimatée vers un œil d'un utilisateur (116), et
un module de surveillance d'intégrité (108),
dans lequel le guide d'ondes est configuré pour diriger au moins une première partie (112) de l'image collimatée à partir de la région de couplage d'entrée vers la région de couplage de sortie afin qu'elle soit dirigée vers l'utilisateur ; et
dans lequel, avant que l'image collimatée ne soit dirigée vers l'œil, une seconde partie (118) de l'image collimatée est configurée pour être dirigée vers le module de surveillance d'intégrité (108)
qui est configuré pour déterminer au moins une divergence entre l'image collimatée et l'image afin de corriger ainsi la première partie de l'image collimatée,
et dans lequel la région de couplage d'entrée est configurée pour diviser l'image collimatée en les première et seconde parties.

2. Système selon la revendication 1, dans lequel les régions de couplage d'entrée et de couplage de sortie comprennent chacune une surface de l'ensemble de guides d'ondes fournissant un effet optique prédéterminé.

3. Système selon la revendication 2, dans lequel chaque surface de l'ensemble de guides d'ondes comprend un revêtement réfléchissant.

4. Système selon la revendication 2 ou la revendication 3, dans lequel chaque surface de l'ensemble de guides d'ondes a une forme prédéterminée.

5. Système selon l'une quelconque des revendications 2 à 4, dans lequel la région de couplage d'entrée comporte une surface réfléchissante ayant un profil en dents de scie qui divise la lumière en un faisceau diffracté +1R et un faisceau diffracté -1R.

6. Système selon l'une quelconque des revendications 2 à 4, dans lequel la région de couplage d'entrée comporte une surface réfléchissante ayant un profil en dents de scie qui divise la lumière en faisceaux d'ordres différents.

7. Système selon l'une quelconque des revendications 2 à 6, dans lequel la région de couplage de sortie comporte une surface réfléchissante ayant un profil en dents de scie.

8. Système selon l'une quelconque revendication précédente, dans lequel l'image collimatée provient d'un élément optique de collimation configuré pour délivrer en sortie une pupille de sortie comprenant l'image collimatée.

9. Système selon l'une quelconque des revendications 1 à 8, dans lequel la région de couplage d'entrée dirige la première partie de l'image collimatée vers la région de couplage de sortie et la seconde partie de l'image collimatée vers le module de surveillance d'intégrité.

10. Système selon l'une quelconque revendication précédente destiné à être utilisé dans un agencement binoculaire comprenant un ensemble de guides d'ondes combinés, de couplage d'entrée et de couplage de sortie pour chaque œil.

11. Système selon l'une quelconque revendication précédente, comprenant en outre un système de correction configuré pour mettre en œuvre une correction de l'image de telle sorte qu'une divergence entre l'image collimatée et l'image soit réduite.

12. Afficheur tête haute comportant le système selon l'une quelconque revendication précédente.

13. Système d'affichage porté sur la tête comportant le système selon l'une quelconque des revendications 1 à 9.

14. Procédé destiné à fournir une image à un utilisateur par l'intermédiaire d'un système d'affichage à guide d'ondes et à déterminer l'intégrité d'une image, le procédé comprenant :
la réception, par l'intermédiaire d'un ensemble de guides d'ondes combinés, de couplage d'entrée et de couplage de sortie, d'une image collimatée à partir d'un système d'imagerie ;
la division, par l'intermédiaire d'une région de couplage d'entrée, de l'image collimatée en des première et seconde parties ;
la direction, par l'intermédiaire d'une région de couplage de sortie, de la première partie de l'image collimatée vers un œil d'un utilisateur,
la direction de la seconde partie de l'image collimatée vers un module de surveillance d'intégrité qui détermine au moins une divergence entre l'image collimatée et l'image dans l'image collimatée afin de corriger la première partie de l'image collimatée.
